# FASCICULE DE BREVET EUROPEEN

(11) **EP 4 618 441 B1**
(45) Date de publication et mention de la délivrance du brevet: **22.04.2026**
(21) Numéro de dépôt: 25161990.4
(22) Date de dépôt: 06.03.2025
(51) Int. Cl.: H04B 7/185, H04W 36/14

(54) **PROCÉDÉ ET SYSTÈME EMBARQUÉ DE SÉLECTION D'UN CANAL DE COMMUNICATION ENTRE UN AÉRONEF ET UNE STATION DISTANTE**
VERFAHREN UND BORDSYSTEM ZUR AUSWAHL EINES KOMMUNIKATIONSKANALS ZWISCHEN EINEM FLUGZEUG UND EINER ENTFERNTEN STATION
METHOD AND ON-BOARD SYSTEM FOR SELECTING A COMMUNICATION CHANNEL BETWEEN AN AIRCRAFT AND A REMOTE STATION

(30) Priorité: 15.03.2024 FR 2402611
(43) Date de publication de la demande: 17.09.2025
(73) Titulaire: AIRBUS OPERATIONS (S.A.S.), 31060 Toulouse (FR)
(72) Inventeur: EMBERGER, Luc, 31060 TOULOUSE (FR); JAMGOTCHIAN, Flora, 31060 TOULOUSE (FR); PINTIAUX, Stéphane, 31060 TOULOUSE (FR)
(74) Mandataire: Airbus-OPS SAS

(56) Documents cités:
- FR-A1- 3 133 721

## Description

### Domaine technique

La présente invention se rapporte à un procédé et système embarqué de sélection d'un canal de communication, parmi une pluralité de canaux de communication, entre un système embarqué de communication d'un aéronef et une station de communication distante de l'aéronef, par exemple disposée au sol.

### Technique antérieure

Les aéronefs utilisent le plus souvent un système de communication de données vers une ou plusieurs stations au sol, permettant aux exploitants d'opérer une surveillance par radio de l'aéronef, en obtenant des informations opérationnelles et logistiques variées telles que, par exemple, la localisation de l'aéronef mais aussi son état, de façon détaillée, et des informations relatives à des pannes éventuelles. Il est ainsi possible d'organiser avec anticipation des actions de maintenance, à réaliser après le retour au sol. Un système de ce type, bien connu, est classiquement nommé ACARS, acronyme du terme anglais « Aircraft Communication Adressing and Reporting System ». Ce système s'appuie sur des moyens de communication initialement basés sur des canaux de transmission HF et VHF puis plus récemment sur des liaisons par satellite de type SATCOM, en particulier dans les zones océaniques.

Dans de nombreuses situations de vol, plusieurs canaux de communications sont disponibles en parallèle, et la qualité de la transmission sur ces canaux peut varier différemment selon le type de canal. Selon certains usages, une liste définissant des préférences d'utilisation de canaux est définie statiquement dans une base de données embarquée de l'aéronef concerné. En outre, il est parfois possible de sélectionner un canal plutôt qu'un autre canal au regard du coût d'exploitation.

Cependant de telles pratiques peuvent conduire à utiliser un canal de transmission qui n'est pas le plus performant à un instant donné. De plus, selon le mode de surveillance et de gestion de la qualité de transmission, des commutations successives de canaux de transmission peuvent s'avérer contreproductives et il convient de trouver un bon équilibre entre l'avantage que peut procurer un changement de canal et les risques inhérents à des commutations trop fréquentes.

On peut alors avoir recours au procédé de sélection d'un canal, dit canal d'utilisation, parmi la pluralité des canaux de communication entre l'aéronef et la station distante, connu du document FR3133721A1, qui associe à chaque canal un indice de qualité de transmission et permet de choisir en temps réel le meilleur canal de communication. Ce procédé assure d'accroître la fiabilité de transmissions de données entre l'aéronef et la station distante en optimisant la sélection d'un canal de transmission et les conditions de basculement d'un canal à un autre canal pour minimiser les risques d'interruption de service.

Pour ce faire, ce procédé de l'état de l'art prévoit l'analyse de transmission de deux types de messages. Un premier type de messages comporte les messages dit utiles, qui sont les messages comprenant des informations devant être envoyées par l'aéronef à la station distante. Un second type des messages comporte des messages sondes, envoyés régulièrement, et dont la fonction est d'être analysés pour permettre la détermination d'un indice de qualité de transmission. Ces messages sondes assurent un bon fonctionnement du procédé de sélection, même en l'absence d'émission de messages utiles.

Néanmoins, ce procédé nécessite l'envoi régulier des messages sondes en surplus des messages utiles. Il serait souhaitable de limiter l'augmentation du trafic d'information qui en découle.

Le but de l'invention est de remédier au moins partiellement à ces inconvénients.

### Exposé de l'invention

L'invention est définie par les revendications. Pour remédier au moins partiellement à ces inconvénient, il est proposé un procédé de sélection d'un canal de communication, dit canal d'utilisation, parmi une pluralité de canaux de communication entre un système embarqué de communication d'un aéronef et une station de communication disposée à distance de l'aéronef, dite station distante, le procédé comprenant :
- une étape de détermination, pour chacun des canaux de communication, d'une ou plusieurs informations représentatives d'une qualité de transmission d'un message entre le système embarqué et la station distante, le message étant soit un message dit « utile » reçu par le système embarqué, soit un message sonde, dit message « ping », les messages ping étant transmis selon une période donnée,
- une étape de classement desdits canaux de communication selon des indices respectivement représentatifs des qualités de transmission déterminées pour chacun desdits canaux, à partir des desdites informations déterminées ; un unique indice étant attribué pour chacun des canaux,
- une étape de sélection du canal d'utilisation comme étant le canal, parmi les canaux de communication, présentant la meilleure qualité de transmission à partir desdits indices,
le procédé comprenant également :
- une étape de détermination d'un temps de mise en mémoire tampon de chaque message utile reçu, dit, temps d'éligibilité, et, si le temps d'éligibilité est non nul,
- une étape d'émission du message utile, dit message utile éligible, à la place d'un message ping via le canal d'utilisation.

Ainsi, grâce au procédé selon la présente invention, le trafic des messages sondes est réduit, ce qui limite la mobilisation du système de communication, et assure une bonne qualité du réseau de communication tout en réduisant les coûts engendrés par la sélection d'un meilleur canal.

On note que, par message dit "utile" reçu par le système embarqué, on entend message transmis vers le système embarqué par une application émettrice source elle-même embarquée à bord de l'aéronef, c'est-à-dire un message confié par l'application émettrice source au système embarqué pour envoi vers la dite station distante, qu'on ne doit pas confondre avec un message reçu depuis la station sol.

Selon un autre aspect, le procédé comprend une étape d'analyse de mise en mémoire tampon du message utile éligible comprenant une étape de vérification dépendant d'un état de la mémoire tampon et d'un paramètre relatif au message utile éligible.

Selon un autre aspect, le système embarqué comprenant au moins une mémoire tampon, dans lequel l'étape d'analyse de mise en mémoire tampon du message utile éligible comprend une étape de détermination d'un ordre de remplissage de ladite au moins une mémoire tampon.

Selon un autre aspect, le système embarqué comprenant une mémoire tampon respective de chaque canal, dans lequel l'étape d'analyse de mise en mémoire tampon comprend une étape de détermination d'un ordre de remplissage desdites mémoires tampon.

Selon un autre aspect, l'étape de détermination d'un ordre de remplissage comprend une étape de calcul d'une durée entre l'émission d'au moins le prochain message ping sur chaque canal et un temps de réception du message utile éligible par le système embarqué, et un classement par ordre croissant des durées obtenues, l'ordre de remplissage des mémoires tampon suivant le classement obtenu.

Par temps de réception, on entend temps maximal de mise en mémoire du message utile éligible.

Selon un autre aspect, au cours de l'étape de comparaison entre un état de la mémoire tampon et un paramètre du message utile éligible, pour le canal dont la mémoire tampon est à remplir en priorité selon l'ordre obtenu à l'issue de l'étape de détermination d'un ordre de remplissage, si ladite mémoire tampon est vide, et si un temps maximal de mise en mémoire tampon du message est supérieur à la durée qui reste jusqu'à la prochaine émission d'un message ping, alors le message utile éligible est mis dans la mémoire tampon, au cours de l'étape d'analyse de mise en mémoire tampon.

Selon un autre aspect, si le temps maximal de mise en mémoire tampon du message est inférieur ou égal à la durée qui reste jusqu'à la prochaine émission d'un message ping, alors le message utile éligible n'est pas mis dans la mémoire tampon et il est envoyé en tant que message utile au cours d'une étape d'envoi.

Selon un autre aspect, le système embarqué comprenant une mémoire tampon commune à tous les canaux, au cours de l'étape de comparaison entre un état de la mémoire tampon et un paramètre du message utile éligible, on compare un nombre de messages contenus dans la mémoire tampon, dit nombre de messages et un nombre total de message ping à envoyer pendant un temps égal à un temps maximal de mise en mémoire tampon du message, dit nombre de pings, et, si le nombre de pings est supérieur au nombre de messages, alors le message utile éligible est mis dans la mémoire tampon, au cours de l'étape d'analyse de mise en mémoire tampon.

Selon un autre aspect, si le nombre de pings est inférieur ou égal au nombre de messages, alors le message utile éligible n'est pas mis dans la mémoire tampon et il est envoyé en tant que message utile au cours d'une étape d'envoi.

L'invention a également pour objet un système embarqué de communication destiné à équiper un aéronef, configuré pour opérer des communications avec une station de communication distante à travers un canal de communication dit « meilleur canal » parmi une pluralité de canaux de communication, le système embarqué comprenant des circuits électroniques et électromagnétiques configurés pour mettre en œuvre les étapes suivantes :
- une étape de détermination, pour chacun des canaux de communication, d'une ou plusieurs informations représentatives d'une qualité de transmission d'un message entre l'aéronef et la station distante, le message étant soit un message dit « utile » reçu par le système embarqué, soit un message sonde, dit message « ping », les messages ping étant transmis selon une période donnée,
- une étape de classement desdits canaux de communication selon des indices respectivement représentatifs des qualités de transmission de bout en bout déterminées pour chacun desdits canaux, à partir des desdites informations déterminées ; un unique indice étant attribué pour chacun des canaux,
- une étape de sélection du canal d'utilisation comme étant le canal, parmi les canaux de communication, présentant la meilleure qualité de transmission à partir desdits indices,
- une étape de détermination d'un temps de mise en mémoire tampon de chaque message utile reçu, dit, temps d'éligibilité, et, si le temps d'éligibilité est non nul, une étape d'émission du message utile, dit message utile éligible, à la place d'un message sonde.

Plus généralement, le système embarqué est configuré pour mettre en œuvre le procédé de sélection tel que décrit précédemment.

L'invention a également pour objet un aéronef comprenant un système embarqué de communication.

L'invention a également pour un support lisible par ordinateur, comportant des instructions pour exécuter le procédé tel que décrit précédemment.

### Brève description des dessins

D'autres caractéristiques, détails et avantages apparaîtront à la lecture de la description détaillée ci-après, et à l'analyse des dessins annexés, sur lesquels :
La figure 1 est une représentation schématique d'un système de communication pour la transmission de données entre un aéronef opérant au sol ou en vol et une station de communication distante de celui-ci.
La figure 2 est un ordinogramme illustrant le déroulement global du procédé d'évaluation de la performance de chacun des canaux de communication disponibles entre l'aéronef et la station distante 3, de la figure 1.
La figure 3 illustre des étapes de sélection d'un canal de communication référencé comme étant le meilleur canal de communication disponible entre l'aéronef 2 et la station distante 3, parmi les canaux C1, C2 et C3.
La figure 4 illustre un ordinogramme du procédé de sélection selon la présente invention.
La figure 5 illustre un exemple du procédé de la figure 4 selon un premier mode de réalisation.
La figure 6 illustre un exemple du procédé de la figure 4 selon un deuxième mode de réalisation.
La figure 7 illustre un exemple d'architecture interne d'un système embarqué selon la présente invention.

### Description des modes de réalisation

Les exemples et les conditions associées détaillés ici sont principalement destinés à aider le lecteur à comprendre les principes de la présente invention et non à limiter sa portée à ces exemples et conditions spécifiques. On comprendra que l'homme du métier peut concevoir divers agencements qui, bien qu'ils ne soient pas explicitement décrits ou représentés ici, incarnent néanmoins les principes de la présente invention et sont inclus dans son esprit et sa portée.

En outre, pour faciliter la compréhension, la description suivante peut décrire des mises en œuvre relativement simplifiées de la présente invention. Comme l'homme du métier le comprend, d'autres mises en œuvre de la présente invention peuvent être d'une plus grande complexité.

Dans certains cas, des exemples de modifications de la présente invention peuvent également être présentés. Ceci est fait simplement comme une aide à la compréhension, et, à nouveau pas pour définir la portée ou établir les limites de la présente invention. Ces modifications ne sont pas une liste exhaustive, et l'homme du métier pourra apporter d'autres modifications tout en restant dans le cadre de la présente invention.

En outre, toutes les déclarations ci-après relatives aux principes, aspects et mises en œuvre de la présente invention, ainsi que les exemples spécifiques de celle-ci, visent à englober à la fois les équivalents structurels et fonctionnels de celle-ci, qu'ils soient actuellement connus ou développés à l'avenir. Ainsi, par exemple, il sera compris par l'homme du métier que tous les schémas fonctionnels représentent des vues conceptuelles d'exemples de circuits incorporant les principes de la présente invention. De même, il sera bien compris que tous les organigrammes, diagrammes de transition d'état, pseudo-code, et similaires, représentent divers processus qui peuvent être implémentés sur des supports lisibles par ordinateur, et ainsi être exécutés par un ordinateur ou un processeur, qu'un tel l'ordinateur ou processeur soit montré sur les figures ou non.

Les fonctions des divers éléments représentés sur les figures, y compris tout bloc fonctionnel, peuvent être assurées par l'utilisation de matériel dédié ainsi que de matériel capable d'exécuter un logiciel approprié. Elles peuvent également être exécutées par un processeur. D'autres matériels, conventionnels et/ou personnalisés, peuvent également être utilisés.

Les modules logiciels, ou les modules supposés être des logiciels, peuvent être représentés ici comme une combinaison d'éléments d'organigramme, ou d'autres éléments indiquant l'exécution des étapes d'un processus, et/ou comme une description textuelle. De tels modules peuvent être exécutés par un matériel qui est expressément représenté ou pas. De plus, il doit être entendu que « module » peut inclure, par exemple, mais sans s'y limiter, une logique de programme informatique, des instructions de programme informatique, un logiciel, une pile logicielle, un micrologiciel, un circuit matériel, ou une combinaison de ces différents éléments qui fournit les capacités requises.

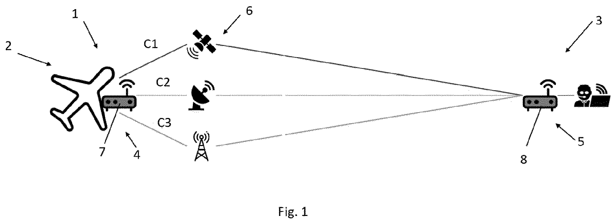

Comme il ressort des figures, l'invention a pour objet un procédé 100 de détermination d'un canal de communication, dit canal d'utilisation, encore appelé meilleur canal, parmi une pluralité de canaux de communication entre un système de communication 1 d'un aéronef 2 et une station de communication située à distance de l'aéronef, et référencée 3 sur la figure 1, et appelée par la suite station distante 3 ou station à distance 3. La présente invention a également pour objet le système de communication 1 pour la mise en œuvre du procédé 100.

Dans la description qui suit, on suppose, de manière non limitative, que le système 1 comprend trois canaux de communication C1, C2 et C3.

Le système de communication 1 comprend un système embarqué de communication 4 équipant l'aéronef 2 et un système 5, dit au sol, disposé à distance du système embarqué 4, équipant la station distante 3. Le système 1 comprend également un dispositif 6 de transmission des canaux C1 à C3 pour une transmission des informations entre l'aéronef 2 et la station distante 3.

De préférence, le système embarqué 4 comprend un routeur 7. Le système 4 comprend également une application embarquée qui est configurée pour assurer toute liaison descendante du trafic d'information vers le sol et éventuellement recevoir des informations du système embarqué 5.

De préférence, le système au sol 5 comprend un routeur 9. Le système 5 comprend également une application de réception du trafic d'information issu du système embarqué 4, et, éventuellement, d'émission d'une liaison montante à destination du système embarqué 4.

Le dispositif de transmission 6 comprend des moyens de communication initialement basés sur des canaux de transmission HF et/ou VHF et/ou de type SATCOM, et/ou tout autre moyen de communication utilisé dans l'aéronautique, comme L-DACS par exemple, ou comme un canal de communication « virtuel » vu de routeur, tel qu'un lien local, type ethernet notamment, vers un système cabine qui fournit de manière agnostique une pluralité de liens physiques.

Avantageusement, et grâce au système de communication 1, l'aéronef 2 peut transmettre une grande variété de données vers la station distante 3, notamment aux fins de localiser avec précision l'aéronef mais aussi d'organiser des actions de gestion, d'exploitation, et de maintenance, pendant le vol ou après un retour au sol. En outre, le système de communication de l'aéronef permet d'apporter des informations pertinentes utiles à l'exploitation de l'aéronef, telles que, par exemple, des informations météorologiques ou en rapport avec un plan de vol de l'aéronef ou d'un aéronef tiers.

Le système embarqué 4 est configuré pour exécuter le procédé 100.

Comme il est connu du document FR3133721A1, le « meilleur canal » est sélectionné à partir d'au moins un premier critère de performance de communication et éventuellement, d'autres, seconds, critères de communication. Les termes « critère de performance » désignent ici un critère visant à évaluer une qualité de transmission, ou qualité de lien de transmission, de bout en bout (entre l'aéronef et une station de communication distante).

De préférence, le premier critère de performance de communication est la latence du canal considéré et les seconds critères, éventuellement considérés, sont des critères de qualité de performances de communications tels que, à titre d'exemple, un rapport signal à bruit ou des informations représentatives de l'usage qui est fait du canal (taux d'utilisation, durée d'utilisation continue, taux d'erreurs, etc.).

Selon des variantes, le premier critère de performance visant à évaluer une qualité de transmission de bout en bout est un critère autre que la latence, représentatif de la qualité de transmission via à un canal de communication, tel que, à titre d'exemples un rapport signal à bruit ou des informations représentatives de l'usage qui est fait du canal (taux d'utilisation, durée d'utilisation continue, taux d'erreurs, etc.) éventuellement pondéré par un ou plusieurs seconds critères.

La latence d'un canal est définie ici comme le temps de parcours complet de données émises depuis l'aéronef 2 jusqu'à la station distante 3 puis réémise par la station distante 3 vers l'aéronef 2. La latence ainsi définie peut être exprimée comme une addition d'une latence dite descendante (depuis l'aéronef 2 jusqu'à la station 3) et d'une latence dite montante (depuis la station 3 jusqu'à l'aéronef 2), les temps des traitements locaux de la station distante 3 étant de préférence négligés.

Selon un mode de réalisation, la latence d'un canal est déterminée au moyen d'un indice représentatif d'une valeur de latence déterminée ou d'un ensemble de valeurs de latence successivement déterminées. Les valeurs de latences déterminées constituent principalement les informations utilisées pour déterminer un indice de latence unique pour chacun des canaux. En d'autres termes, un indice de latence propre à un canal considéré peut être déterminé à partir d'une valeur de latence déterminée ou à partir d'un ensemble de valeurs de latence déterminées pour ce canal sur un intervalle de temps donné, telles que, à titre d'exemples, une latence minimale, une latence maximale ou encore une latence moyenne ou médiane. Lorsque des indices de latence sont déterminés pour chacun des canaux de communication, les canaux de communication sont classés par indice. Ainsi, l'indice de latence le plus bas correspond à l'indice de latence du canal de communication détecté comme offrant les meilleures performances de communication parmi les canaux disponibles et l'indice de latence le plus haut correspond à l'indice de latence du canal de communication détecté comme offrant les moins bonnes performances de communication, ou vice-versa. Selon un mode de réalisation, une information représentative de la latence d'un canal à un instant donné est déterminée à partir de transmissions qui viennent d'être opérées en déterminant le temps de trajet d'un paquet de données de bout-en-bout.

Selon un autre mode de réalisation, une information représentative de la latence d'un canal à un instant donné est déterminée par l'utilisation d'une fonction dite « ping », communément utilisée dans les réseaux de communication, notamment informatiques, et s'appuyant par exemple sur des protocoles de communications de type TCP (sigle anglais de « Transmission Control Protocol » et qui signifie « protocole de contrôle de transmission ») ou ICMP (sigle anglais de « Internet control Message Protocol », et qui signifie « protocole de contrôle d'un message sur internet ». Globalement, la fonction ping est une commande informatique destinée à tester l'accessibilité d'une machine distante à travers un réseau de communication et à mesurer, dans le cas où la machine distante est accessible, le temps mis pour recevoir une réponse, encore appelé « temps aller-retour » ou « round-trip time » (RTT) en anglais.

Selon un autre mode de réalisation, la latence d'un canal de communication est déterminée à partir de communications « utiles » opérées via ce canal, et en l'absence de communications suffisamment régulières, la fonction ping est utilisée de façon complémentaire aux communications « utiles ». Dans le cas d'une latence définie à partir de communications « utiles » opérées sur un canal de communication, le ou les paquets de données servant à la détermination d'une latence comprennent des informations similaires à celles utilisées dans les messages implémentant une fonction ping.

La répartition entre la transmission des messages utiles et des pings est détaillée ultérieurement en relation avec la description du procédé 100.

Après avoir caractérisé les latences de différents canaux de communication disponibles entre l'aéronef 2 et la station distante 3, et par voie de conséquence, les performances de ces différents canaux que sont les canaux C1, C2, C3, le système embarqué 4 peut vérifier si le canal offrant la meilleure performance de communication est toujours le canal utilisé initialement (c'est-à-dire au début de l'activation du procédé 100, dont on suppose, pour simplifier, qu'il s'agit du premier canal C1), et, le cas échéant changer de canal d'utilisation. Ainsi, si le système embarqué 4 détecte que le canal déterminé comme étant le meilleur canal n'est pas celui sur (via) lequel les premières communications sont opérées, le système commence à opérer des deuxièmes communications, via un deuxième canal de communication qui est le meilleur canal de communication détecté, parallèlement aux premières communications opérées sur le premier canal. Dans cette configuration, les transmissions opérées entre l'aéronef 2 et la station distante 3 sont redondantes et la station distante au sol gère la redondance des données qu'elle reçoit par élimination des doublons.

Le système embarqué 4 scrute l'évolution du classement qu'il opère des canaux, en termes de performances, pendant un délai DP prédéterminé, de sorte que, si au terme du délai DP, le deuxième canal est toujours le meilleur canal, alors les premières communications opérées via le premier canal sont interrompues. Dans ce cas, le deuxième canal de communication, alors unique canal de communication, « devient » le premier canal et les deuxièmes communications « deviennent » les premières communications et le procédé de détermination du meilleur canal continue de s'exécuter sur cette nouvelle base. A défaut, le système embarqué 4 de communication continue d'opérer les premières communications via le premier canal de communication. Selon une variante, pour que le système embarqué 4 de communication cesse d'opérer les premières communications et opère le basculement de canal entre le premier canal de communication et le deuxième canal de communication (déterminé comme le meilleur canal de communication), il convient non seulement que le deuxième canal soit le meilleur canal au terme du délai DP, mais également qu'il le soit resté tout au long du délai DP, ce qui tend à montrer et permet de vérifier que le deuxième canal de communication est suffisamment fiable à cet instant, ou à tout le moins qu'il offre des performances conformes aux attentes à cet instant. Cela permet en outre de créer un filtre temporel évitant d'opérer un basculement de canal lorsque la situation relative des différents canaux n'est pas du tout stable en termes de performances (phénomènes transitoires).

Selon un mode de réalisation, le système embarqué 4 de l'aéronef 2 transmet à la station distante 3 le classement des canaux par indice de performances, de sorte que la station distante 3 soit informée de la qualité relative des canaux de communication telle qu'elle est évaluée par l'aéronef 2. Ces informations peuvent être envoyées à la station distante 3 sous la forme de données codées et repérées selon un protocole prédéfini. Par exemple, un entête de paquet porte un identifiant reconnaissable et comprend un nombre de canaux, suivi d'une liste d'identifiants de canal, classés par ordre croissant ou décroissant de performances. Ainsi, la station distante 3 peut sélectionner un canal de communication pour opérer des communications montantes, dans le cas où ces dernières ne sont pas opérées via le même canal de communication que celui utilisé pour opérer des communications descendantes. Selon un mode de réalisation de l'invention, la station distante 3 opère toute communication montante sur le dernier canal utilisé pour une communication descendante. Selon une variante, la station distante 3 utilise les informations reçues depuis l'aéronef, relatives à la performance des canaux, pour sélectionner le canal à utiliser pour les communications montantes à suivre.

Avantageusement, différentes techniques d'évaluation de la latence des canaux peuvent être mises en œuvre pour évaluer cette dernière en fonction du type de canal utilisé. Par exemple, l'évaluation de la latence d'un premier canal peut être réalisée en utilisant une commande (ou fonction) réseau ping selon un protocole ICMP et l'évaluation de la latence d'un deuxième canal de communication peut être réalisée en utilisant une commande réseau ping selon un protocole TCP. Selon un raisonnement similaire, les latences des liens descendants seulement sont utilisées pour opérer un classement des canaux en termes de performances.

Selon un exemple, la latence d'un canal de communication peut être déterminée en défalquant le temps d'émission d'un message à partir du système embarqué 4 au temps de réception de ce même message par la station distante 3, pour ce qui concerne une latence de lien descendant. Selon un autre exemple, la latence d'un canal peut être déterminée en défalquant le temps de réception d'un accusé de réception, émis par la station distante 3 en réponse à un message émis par l'aéronef, au temps d'émission de ce message par le système embarqué 4 de l'aéronef. En outre, une approximation peut être réalisée visant à déterminer une latence d'un lien montant ou descendant comme étant la moitié du temps de trajet complet (RTT).

Dans le cas où une fonction ping est utilisée pour déterminer une latence, les commandes ou fonctions réseau ping comprennent des informations utiles à leur bonne réalisation, à savoir un identifiant de commande ping, un identifiant d'émetteur, un identifiant de destinataire, un instant d'émission, un instant de réception par le destinataire, un type de lien, un ou plusieurs identifiants de dispositif de routage de message (de commande), un indice de qualité déterminé par l'aéronef pour le canal utilisé, etc. Cette liste d'exemples n'étant pas exhaustive.

Avantageusement, l'évaluation d'un canal opérée par le système embarqué 4 peut comprendre d'autres paramètres, tels que, à titre d'exemple un indice de qualité du lien (rapport signal à bruit, par exemple), un taux d'erreurs de transmission via le lien concerné, un « jitter », défini comme la variation dans le temps de la latence, un nombre de mesures de latence opérées sur un intervalle de temps prédéterminé, de nature à indiquer un taux de fiabilité de la latence déterminée, un taux d'occupation d'un canal de communication. Par exemple, les indices de latence déterminés pour chacun des canaux peuvent être pondérés par un coefficient de pondération défini, pour chacun des canaux, par un indice de qualité de transmission et/ou par un indice représentatif d'un usage du canal considéré sur un intervalle de temps prédéfini.

Selon un mode de réalisation, le système embarqué 4 exécute en parallèle un premier procédé d'évaluation de la performance de chacun des canaux et de classement des canaux selon un indice, principalement déterminé, pour chacun des canaux, à partir de la latence de ce canal, et un deuxième procédé de sélection d'un meilleur canal de communication à partir du classement opéré en tâche de fond. Les deux procédés étant en réalité deux sous-procédés du procédé global de sélection d'un canal de communication selon l'invention.

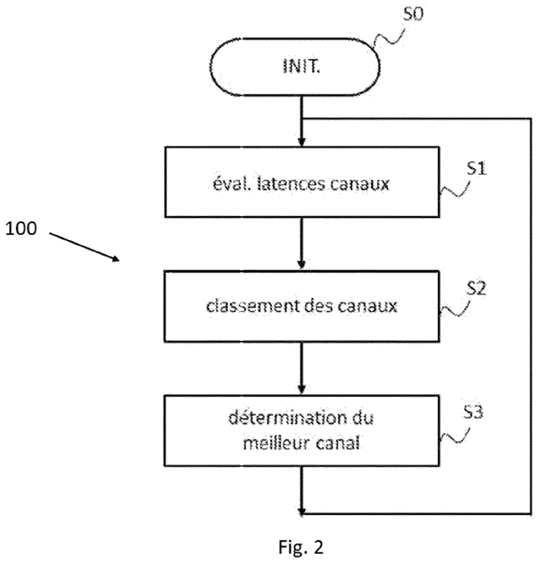

La figure 2 est un ordinogramme illustrant le déroulement global du procédé (ou plus exactement sous-procédé) d'évaluation de la performance de chacun des canaux de communication disponibles entre l'aéronef 2 et la station distante 3, de définition d'un indice unique par canal déterminé à partir de la latence du canal, éventuellement pondéré par un autre indice de performances de transmissions, puis de classement des canaux de communication, selon les indices déterminés, de sorte à définir un ordre établi, partant du meilleur canal de communication au moins bon canal de communication ou inversement.

Comme il ressort de la figure 2, une étape S0 est une étape d'initialisation des systèmes de l'aéronef 2, au terme de laquelle les systèmes de l'aéronef sont alimentés en énergie électrique, initialisés et normalement opérationnels. En particulier, le système embarqué 4 configuré pour pouvoir opérer les premières communications sur un premier canal de communication disponible et sélectionné, en particulier vers la station distante 3.

Lors d'une étape S1, des commandes ping sont exécutées à intervalles réguliers sur tous les canaux de communication disponibles entre l'aéronef 2 et la station distante 3, de sorte à définir une ou plusieurs informations de latence pour chacun des canaux.

La fréquence d'exécution de commande ping est, selon un exemple, telle qu'une commande ping est envoyée une fois toutes x secondes, x étant par exemple compris entre 1 seconde et 60 secondes, par exemple 2 secondes, 6 secondes, 8 secondes, 10 secondes, 30 secondes. Cette fréquence de mesure de la latence d'un canal de communication peut toutefois être augmentée ou diminuée en fonction des résultats observés sur chacun des canaux de communication. En outre, cette fréquence d'évaluation par canal peut différer d'un canal à un autre canal, selon le type de canal, notamment.

Selon le procédé 100, comme il sera détaillé ultérieurement, des communications « utiles » peuvent être envoyées à la place des messages ping, voire peuvent être suffisamment fréquentes pour ne pas avoir recours à l'utilisation de commandes ping, et les communications courantes sont utilisées pour définir la latence de chacun des canaux de communication disponibles. Les paquets de données échangés sur le canal contiennent alors toutes les informations utiles à la détermination d'une latence, c'est-à-dire des informations équivalentes à celles présentes dans une commande ping pour opérer un calcul de latence. Un intervalle de valeurs de latence et une valeur moyenne de latence peuvent être définis pour chacun des canaux de communication C1, C2, C3 et un indice de latence peut être déterminé à partir de ces informations de latence. Un indice de latence peut être déterminé, par exemple, de sorte que le canal présentant la latence la plus importante se voit attribuer un indice de latence égal à 10 et le canal présentant la latence la plus faible se voit attribuer un indice de latence égal à 0, ou vice-versa, selon la convention de définition d'indice utilisée. Typiquement, dans le système embarqué 4 de communication, les valeurs de latence sont exprimées en secondes. L'évaluation de la latence de chacun des canaux est ainsi réalisée pendant une durée T1, usuellement de plusieurs minutes.

Lors d'une étape S2, les indices de latence définis pour chacun des canaux sont enregistrés dans une table et les canaux sont classés dans cette table par ordre de performances (latences ou latences pondérées). La table de classement des canaux est par exemple enregistrée dans une mémoire volatile ou non-volatile du système embarqué 4 de communication de l'aéronef 1. Une étape S3 consiste à repérer le canal de communication dont l'indice est représentatif de la meilleure performance de communication, de sorte que le procédé amélioré de sélection d'un canal de communication, exécuté par le système embarqué 4, puisse, par une simple lecture en mémoire, connaitre le canal présentant les meilleures conditions de communication vers la station distante 10.

Après l'étape S3, le procédé reboucle à l'étape S1, ce qui revient à dire que l'évaluation de la latence des canaux est réalisée de façon continue, en tâche de fond, par le système embarqué 4 de l'aéronef 2. Dans le cas où des secondes informations, représentatives de la qualité de la transmission des canaux, sont utilisées pour pondérer les indices de latence des canaux, ces opérations sont exécutées lors de l'étape S1 et les indices pondérés sont considérés pour le classement effectué à l'étape S2. Dans ce cas, les informations représentatives de la qualité des transmissions sont définies protocolaires et transmises lors d'échanges des messages entre l'aéronef 2 et la station distante 3, mais aussi, éventuellement à partir de communications tierces, opérées vers des équipements de référence.

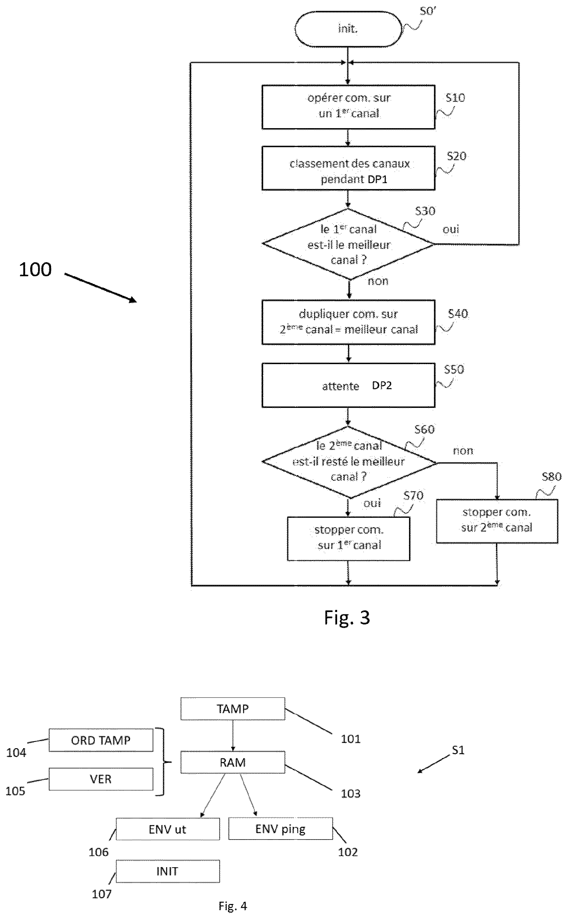

La figure 3 illustre des étapes de sélection d'un canal de communication référencé comme étant le meilleur canal de communication disponible entre l'aéronef 2 et la station distante 3, parmi les canaux C1, C2 et C3. Il s'agit là aussi, plus exactement, d'un sous-procédé du procédé amélioré de sélection d'un canal de communication selon l'invention, puisque selon le mode de réalisation décrit, deux sous-procédés exécutés en parallèle opèrent les étapes du procédé complet. Une étape S0' correspond à une étape d'initialisation des systèmes de l'aéronef 2, au terme de laquelle les systèmes sont alimentés en énergie, initialisés et normalement opérationnels. En particulier, le système embarqué 4 est configuré pour pouvoir opérer les premières communications sur un premier canal de communication disponible et sélectionné, en particulier vers la station distante 3. Selon un mode de réalisation, les étapes S0 et S0' sont confondues en une seule et même étape dite de « mise en route » de l'aéronef. Lors d'une étape S10, le système embarqué 4 de communication de l'aéronef 2 envoie des premières informations (données) vers la station distante 3, après avoir sélectionné un premier canal de communication vers la station distante 10 puis attend, lors d'une étape S20, pendant une durée DP1 (de plusieurs secondes à plusieurs minutes, typiquement), qu'une détermination du meilleur canal puisse être réalisée en tâche de fond, de sorte à pouvoir déterminer, au terme d'une étape S30, si le premier canal sélectionné pour opérer les premières communications est le meilleur canal ou non. Dans le cas où il est déterminé, à l'étape S30, que le canal actuellement utilisé (soit le premier canal) est le meilleur canal, le procédé reboucle à l'étape S10 et continue donc d'opérer les communications avec la station distante via le premier canal. Dans le cas contraire, c'est-à-dire si le canal courant n'est pas le meilleur canal, le procédé initie, lors d'une étape S40, des communications additionnelles, encore appelées ici deuxièmes communications, via un deuxième canal de communication qui n'est autre que le canal déterminé comme étant le meilleur canal par lecture de l'information comprise dans la mémoire du système embarqué 4, et actualisée par l'exécution continue du procédé 100. Une nouvelle attente, d'une durée DP2 est alors opérée lors d'une étape S50, dans le but de réaliser un « filtre temporel », c'est-à-dire dans le but de pouvoir vérifier si le deuxième canal continue d'offrir les meilleures performances de communication au terme du délai DP2. Pour ce faire, une nouvelle lecture du meilleur canal de communication est réalisée lors d'une étape S60, au terme du délai DP2. Selon un mode de réalisation de l'invention, la durée DP2 est par exemple comprise entre 1 minute et 4 minutes, par exemple 2 minutes.

Dans le cas où le deuxième canal est toujours le meilleur canal au terme du délai DP2, les premières communications opérées sur le premier canal sont stoppées lors d'une étape S70 et le procédé reboucle à l'étape S10. Dans ce cas, le deuxième canal est alors considéré comme le premier canal pour la réitération du sous-procédé décrit et les deuxièmes communications sont alors considérées comme les premières communications. Dans le cas contraire, c'est-à-dire si un autre canal est déterminé comme étant le meilleur canal de communication au terme du délai DP2 lors de l'étape S60, les deuxièmes communications opérées sur le deuxième canal sont stoppées lors d'une étape S80 et les premières communications continuent à être opérées sur le premier canal, puis le procédé reboucle à l'étape S10. Avantageusement et selon un mode de réalisation de l'invention, il est vérifié lors des étapes S50 et S60 que le deuxième canal de communication reste le meilleur canal de communication pendant toute la durée du délai DP2. A défaut, une information additionnelle est définie (un indicateur de variation du meilleur canal au cours du délai DP2) permettant de forcer le résultat du test opéré lors de l'étape S60.

Selon un mode de réalisation de l'invention, le procédé de sélection décrit peut être désactivé par un opérateur dans l'aéronef ou au sol pour opérer alors une sélection de canal de communication à partir d'un deuxième procédé de sélection, utilisant par exemple des critères de préférence de canal de communication définis statiquement.

On fait maintenant référence à la figure 4.

Comme il ressort de cette figure, le procédé 100 comprend également, au cours de l'étape S1 :
- une étape (101 - TAMP) de détermination d'un temps, Tbx, de mise en mémoire tampon de chaque message Mx utile reçu, dit, temps d'éligibilité, et, si le temps d'éligibilité est non nul,
- une étape (102 - ENV ping) de transmission du message utile comme message sonde, c'est-à-dire à la place d'un message ping.

Le temps de mise en mémoire tampon Tbx peut être par exemple le temps maximal possible de mise en mémoire tampon, tenant compte d'un retard considéré comme acceptable du message et, éventuellement du retard de transmission du réseau de communication. Plus généralement, le temps de mise en mémoire tampon peut être tout temps caractéristique d'un temps acceptable de la mise en mémoire tampon.

On appelle « messages non éligibles » les messages utiles dont le temps de mise en mémoire tampon est nul. On appelle « messages éligibles » les messages utiles dont le temps de mise en mémoire tampon est non nul. Pour ces messages-ci, le procédé 100 comprend, de préférence dans l'étape S1, une étape (103 - RAM) d'analyse de mise en mémoire tampon du message utile, la transmission du message ayant lieu au cours de l'étape 102 à un moment approprié à la place d'un message ping, comme il sera décrit ultérieurement.

Ainsi, grâce à la mise en mémoire tampon, dès que possible, des messages utiles, pour un envoi à la place des messages ping, le procédé 100 assure une réduction du nombre de messages échangés entre l'aéronef 2 et la station distante 3, ce qui préserve le réseau de communication 1, réduit l'énergie nécessaire au fonctionnement du système 1 et assure une réduction du coût associé.

On rappelle que, pour chaque canal C1, C2, C3, des pings sont émis par le système 4 à une fréquence fixée. On appelle Tp1 la période d'émission de pings P1 sur le canal C1, Tp2 la période d'émission de pings P2 sur le canal C2 et Tp3 la période d'émission de pings P3 sur le canal C3.

Comme il ressort également de la figure 4, le système 4 comprenant au moins une mémoire tampon, l'étape 103 d'analyse de mise en mémoire tampon du message utile éligible comprend une étape (104 - ORD TAMP) de détermination d'un ordre de remplissage de ladite au moins une mémoire tampon, décrite ultérieurement pour chacun des deux modes de réalisation détaillés

Comme il ressort également de la figure 4, l'étape 103 d'analyse de mise en mémoire tampon du message utile éligible comprend une étape de vérification (105 - VER) dépendant d'un état de la mémoire tampon et d'un paramètre relatif au message utile éligible, décrite ultérieurement pour chacun des deux modes de réalisation détaillés.

On détaille maintenant le premier mode de réalisation.

Selon un premier mode de réalisation, chaque canal C1, C2, C3 présente une mémoire tampon respective, notée B1, B2, B3. Selon ce mode de réalisation non limitatif, les mémoires tampon B1 à B3 ont de l'espace pour un message uniquement.

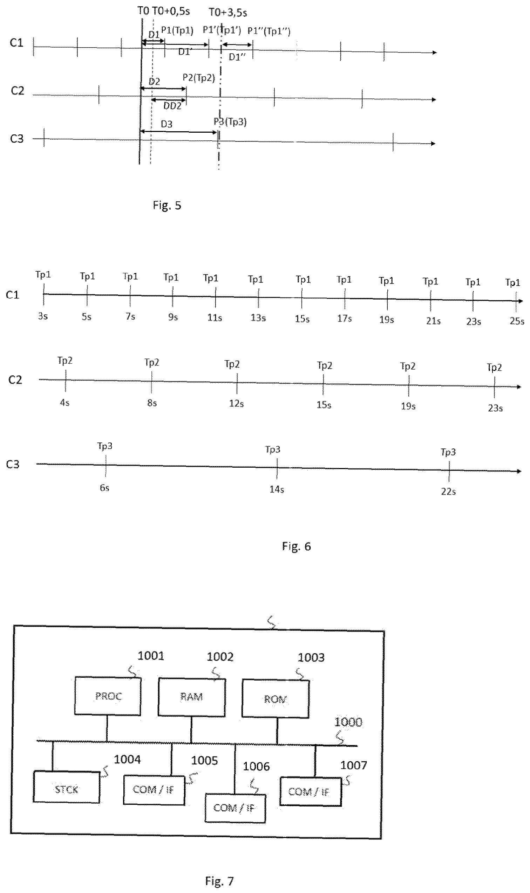

Selon ce mode de réalisation, illustré sur les figures 4 et 5, l'étape 103 comprend une étape (104 - ORD TAMP) préalable de détermination d'un ordre de remplissage des mémoire B1, B2, B3. Les mémoires B1, B2, B3 sont remplies selon un ordre de remplissage qui suit une règle dite du prochain ping, que l'on va expliquer.

Au cours de l'étape 104, le procédé 100 calcule pour chaque canal, à un temps T0 donné de réception d'un message, la durée qu'il reste jusqu'à l'émission du ou des ping(s) suivant(s).

On note que, dans la présente description, "réception de message utile" ou "message utile reçu" correspond à un message initié par l'application source du message à bord, et reçu (ou transmis) par le (ou au) système de communication bord en charge de gérer la communication vers le sol.

En d'autres termes, on détermine la différence temporelle entre chacun des temps Tp1, Tp2, Tp3 et T0, et le cas échéant la différence temporelle entre des multiples des périodes Tp1 (Tp1', Tp1") à Tp3 et T0, et on classe par ordre croissant chaque différence D.

On en déduit l'ordre de remplissage des mémoires tampons B1, B2, B3 : la mémoire remplie en priorité, ou mémoire prioritaire, est celle pour laquelle le canal présente la plus petite différence temporelle, Tmin, la deuxième mémoire prioritaire est celle, parmi les mémoires autres que la mémoire prioritaire, pour laquelle le canal présente une plus petite différence temporelle (après Tmin), et ainsi de suite jusqu'à ce que toutes les mémoires aient été évaluées.

A chaque fois qu'un message utile Mx éligible est reçu par le système embarqué 4, le procédé 100 comprend une étape de vérification (105 - VER) de l'état de remplissage de la mémoire tampon prioritaire Bi.

Si elle n'est pas vide, on vérifie l'état de remplissage de l'état de la deuxième mémoire tampon prioritaire.

Si elle est vide, le procédé 100 comprend une étape de comparaison entre le temps, D, qui reste jusqu'à la prochaine émission d'un message ping sur le canal Ci de la mémoire tampon Bi et le temps maximal de mise en mémoire tampon du message, Tbx. Si le temps Tbx est supérieur au temps D, alors le message Mx est mis dans la mémoire tampon Bi, au cours de l'étape 103. Sinon, le message Mx ne peut plus être retardé et il est envoyé en tant que message utile, au cours d'une étape d'envoi (106 - ENV ut).

Alors, le procédé 100 comprend une étape (107 - INIT) de ré-initialisation de la séquence des messages ping.

On fait plus particulièrement référence à la figure 5 qui illustre un exemple du mode de réalisation, bien entendu non limitatif, du premier mode de réalisation du procédé 100.

Comme il ressort de cette figure, on considère trois canaux de communication, C1, C2 et C3. Chacun des canaux présente une période de « ping », respective de 2s (pour C1), 4s (pour C2) et 8s (pour C3).

Considérons trois messages successifs, notés Ma, Mb et Mc. Chacun des messages Ma, Mb et Mc présente un temps maximal de mise en mémoire tampon, noté respectivement Tba, Tbb et Tbc, tels que Tba=8s, Tbb=10s et Tbc=1s.

Le message Ma est reçu par le système embarqué 4 à T0. Le message Mb est reçu par le système 4 à T0+0,5s. Le message Mc est reçu par le système embarqué 4 à T0+3,5s.

Sur la figure 5, on a noté Tp1 le temps d'émission du premier « ping » P1 sur le canal C1 immédiatement après T0, Tp1' le temps d'émission du « ping » P'1 successif du « ping » P1 sur le canal C1, Tp2 le temps d'émission du premier « ping » P2 sur le canal C2 immédiatement après T0, et Tp3 le temps d'émission du premier « ping » P3 sur le canal C3 immédiatement après T0.

Sur la figure 6, on a choisi TO=Tp1-1s =Tp2-2s = Tp3-3,5s.

Dans l'exemple de la figure 6, quatre « pings » sont considérés.

Au cours de l'étape 104, l'ordre de priorité de remplissage des mémoires tampon est défini selon le prochain « ping » à survenir. Comme déjà indiqué, au cours de l'étape 101, on calcule chacune des différences suivantes : D1=Tp1-T0=1s ; D2=Tp2-T0=2s ; D3=Tp3-T0=3,5s ; D1'=Tp1'-T0=3s.

Dans le cas d'espèce, D1<D2<D1'<D3. Ainsi, les « pings » seront successivement P1, P2, P1' et P3. On en déduit l'ordre suivant de remplissage des mémoires : B1, puis B2 et B3.

Au cours de l'étape 105, on détermine si le message Ma peut être mis en tampon, et, si oui, sur quel canal.

En l'occurrence, selon l'ordre établi pour le remplissage des mémoires, il s'agit de savoir si le message Ma peut être mis en mémoire tampon dans la mémoire B1. Deux conditions doivent être remplies, à savoir :
- B1 vide, ce qui est le cas, et
- le temps maximal de mise en tampon supérieur au temps du ping P1.

En comparant D1 et Tba, on constate bien que D1=1s<Tba=8s. Ainsi, le message Ma est effectivement mis en mémoire tampon dans la mémoire B1.

Le message Mb est reçu par le système 4 au temps T0+0,5s.

La mémoire B1 étant pleine, le message Mb peut être mis en mémoire tampon dans la mémoire B2 si B2 est vide et son temps maximal Tbb est supérieur au temps du ping P2, ce qui est le cas, puisque DD2=Tp2-(T0+0,5)=1,5s<Tbb=10s.

Le message Mb est ainsi mis en mémoire tampon dans la mémoire B2.

Au temps T0+1s, le message Ma est envoyé à la place du « ping » P1 sur le canal C1 à destination de la station à distance 3.

Au temps T0+2s, le message Mb est envoyé à la place du « ping » P2 sur le canal C2 à destination de la station à distance 3.

Au temps T0+3s, c'est de nouveau au tour du premier canal C1 d'émettre un « ping ». La mémoire B1 étant vide, aucun message ne peut être envoyé comme « ping » et un « ping » sonde est alors envoyé sur le canal C1.

Au temps T0+3,5s, le message Mc est reçu par le système 4.

Au temps T0+3,5s, l'ordre de remplissage est B1 - B2 - B3, selon un calcul identique à celui déjà décrit.

Pour que le message Mc puisse être mis en mémoire tampon dans la mémoire B1, il faut que deux critères soient remplis :
- B1 est vide,
- le temps maximal de mise en mémoire tampon (Tbc) est supérieur à la différence temporelle D1" entre le temps du prochain ping P1" sur le canal C1 et l'instant courant (en l'occurrence T0+3,5s), D1"=1,5s. Or ce temps D1" est supérieur au temps maximal de mise en mémoire tampon Tbc du message Mc.

Le message Mc ne peut pas être mis dans la mémoire tampon, et est envoyé directement sur le canal d'utilisation. L'indice de qualité du canal est alors évalué grâce à cet envoi, conformément aux enseignements du brevet FR 22 02302. Si le canal d'utilisation est le deuxième canal C2, alors le message Mc est envoyé par sur deuxième canal C2 à la station à distance 3.

Ensuite, la chronologie des périodes de « ping » du canal C2 est réinitialisé au temps d'envoi du message Mc, à l'étape 107. A réception du prochain message utile, le procédé 100 peut à nouveau établir l'ordre de remplissage des mémoires B1, B2, B3 selon l'étape 104.

Selon un deuxième mode de réalisation, la mémoire tampon B est commune aux trois canaux C1, C2, C3. On note que, selon ce mode de réalisation, le procédé 100 maintient à chaque instant l'ordre chronologique des pings. On note également que, selon ce mode de réalisation, la mémoire tampon a une taille variable.

Selon ce mode de réalisation, illustré sur les figures 4 et 6, le procédé 100 comprend une étape (105 - VER) de comparaison entre un état de la mémoire tampon B et un paramètre relatif au message utile éligible. L'état de la mémoire tampon B correspond au nombre de messages utiles contenus dans la mémoire tampon B, Nm. Le paramètre relatif au message utile éligible est le nombre de pings à émettre sur les trois canaux C1, C2, C3 pendant le temps maximal de mise en mémoire tampon Tb, Np.

Si le nombre de pings Np est supérieur au nombre de messages Nm, alors le message utile éligible est mis dans la mémoire tampon, au cours de l'étape 103 d'analyse de mise en mémoire tampon.

Si le nombre de pings Np est inférieur ou égal au nombre de messages Nm, alors le message utile éligible n'est pas mis dans la mémoire tampon et il est envoyé en tant que message utile au cours d'une étape d'envoi (106 - ENV ut).

Comme visible sur la figure 4, le procédé 100 comprend également une étape 104 de mise en ordre pour envoi des messages contenus dans la mémoire tampon B. Les messages contenus sont classés en fonction d'un paramètre qui est une différence temporelle entre le temps maximal de mise en mémoire tampon du mémoire et du moment où se trouve le procédé 100 (qui est un temps de réception d'un message par le système embarqué 4). Les différences temporelles sont classées par ordre croissant. C'est cet ordre qui détermine l'ordre de passage des messages, du message le plus prioritaire (correspondant à la différence temporelle la plus petite) au message le moins prioritaire (correspondant à la différence temporelle la plus grande).

On décrit maintenant un exemple illustrant ce deuxième mode de réalisation en référence à la figure 6. Sur cet exemple, les périodes des pings sur les canaux C1, C2 et C3 sont respectivement : Tp1=2s, Tp2=4s, Tp3=8s.

Comme déjà indiqué, le procédé 100 maintient à chaque instant l'ordre chronologique des pings. Sur l'exemple, la séquence est la suivante : Tp1, Tp2, Tp1, Tp3, Tp1, Tp2,..., comme visible sur la figure 6 et récapitulé dans le tableau ci-après :

| Prochain ping | Temps |
|---|---|
| Tp1 | 3s |
| Tp2 | 4s |
| Tp1 | 5s |
| Tp3 | 6s |
| Tp1 | 7s |
| Tp2 | 8s |
| Tp1 | 9s |
| Tp1 | 11s |
| Tp2 | 12s |
| Tp1 | 13s |
| Tp3 | 14s |

Considérons trois messages, un premier message Ma reçu par le système embarqué 4 à T0, avec un temps maximal de mise en mémoire tampon Tba=8s, un deuxième message, Mb, reçu à T0+2s de temps maximal de mise en mémoire tampon Tbb=10s, et un troisième message Mc, de temps maximal de mise en mémoire tampon Tbc=5s, est reçu par le système embarqué 4 à T0+3,5s.

A l'instant T0, le message Ma est reçu par le système embarqué 4.

Le message Ma est mis dans la mémoire tampon si le nombre de messages utiles dans la mémoire tampon est inférieur au nombre de pings à effectuer dans l'intervalle du temps Tba. En l'occurrence, la mémoire tampon est vide donc le message Ma est mis dans la mémoire tampon, avec son temps Tba initial, égal à 8s.

Au temps T0+2s, le message Mb est reçu par le système embarqué 4.

Le message Mb est mis dans la mémoire tampon si le nombre de messages utiles dans la mémoire tampon est inférieur au nombre de pings à effectuer dans l'intervalle du temps Tbb. En l'occurrence, la mémoire tampon comprend un message (Ma) et le nombre de ping à effectuer en 10s est 7. Donc, le message Mb est mis dans la mémoire tampon.

Le temps de mise en mémoire tampon à T0+2s pour le message Ma est Tba(T0+2s)=8-2=6 s, ce qui est inférieur au temps maximal Tbb de 10 s. Alors, le message Mb est placé à la deuxième position dans la mémoire tampon derrière le message Ma.

A T0+3s, le message Ma est envoyé sur le canal C1 à la place d'un ping P1. Précisons que le Tbb(T0+3s)=9s. Il s'est passé 1 seconde depuis la mise en tampon du message Mb.

A T0+3,5s, le message Mc est reçu par le système embarqué 4.

Dans les 5s à venir, il y a 2 pings à envoyer, tandis que la mémoire tampon comprend un unique message (Mb). Donc, le message Mc est mis dans la mémoire tampon.

Le temps de mise en mémoire tampon à T0+3,5s pour le message Mb est Tbb(TO+3,5s)=10-3,5+2=10-1,5s=8,5s, ce qui est supérieur au temps maximal Tbc de 5 s. Alors, le message Mb est placé à la deuxième position dans la mémoire tampon tandis que le message Mc est placé en première position.

Le ping suivant arrive à T0+4s. Le premier message dans le tampon est envoyé comme ping. Il s'agit du message Mc qui est donc retardé de 0,5s avant d'être envoyé pour Tp2. Le message Mb, qui devait être initialement envoyé à T0+4s (soit 2 secondes de retard), passe 3 secondes dans la mémoire tampon. Il sera donc retardé de 3 secondes.

On note que, lorsqu'un message utile non éligible est envoyé sur le canal d'utilisation, ou meilleur canal, la chronologie des périodes de « ping » de canal est réinitialisée (étape 107) au temps d'envoi du message.

Par exemple, lorsque le canal prioritaire est le C3 et un message non éligible arrive à T0, le message non éligible envoyé sert de sonde sans être mis dans la mémoire tampon. Etant non éligible, il est envoyé directement. Son envoi sert quand même de mesure.

A ce moment-là (T0 dans l'exemple), la chronologie des pings est revue. Le lien C3 bénéficie d'une mesure à T0. Sa période de ping étant de Tp3 = 8sec, son prochain ping aura lieu à T0 + 8sec puis T0 + 16 sec puis T0 + 24sec ...Les ping des autres canaux restent inchangés. Et donc la liste des prochains pings change légèrement puisque les Tp3 glissent vers le bas de la liste). On note qu'alors le système vérifie qu'il n'y a pas trop de messages dans la mémoire tampon. S'il y en a trop, les premiers messages du buffer sont immédiatement envoyés.

On note que,quel que soit le mode de réalisation, le nombre de messages pings nécessaire au bon fonctionnement du système de communication 1 est réduit, ce qui libère de la bande passante, et réduit l'énergie à fournir ainsi que le coût associé.

La figure 7 illustre schématiquement un exemple d'architecture interne du système embarqué 4 de l'aéronef 2. Comme il ressort de cette figure, le système embarqué 4 comprend alors, reliés par un bus de communication 1000 : un processeur ou CPU (« Central Processing Unit » en anglais) 1001 ; une mémoire vive RAM (« Random Access Memory » en anglais) 1002 ; une mémoire morte ROM (« Read Only Memory » en anglais) 1003 ; une unité de stockage telle qu'un disque dur (ou un lecteur de support de stockage, tel qu'un lecteur de cartes SD (« Secure Digital » en anglais) 1004 ; des interfaces de communication 1005, 1006 et 1007 configurées pour opérer des communications sur, respectivement, les canaux de communication C1, C2, C3. Le système de communication embarquée 4 comprend en outre des interfaces de type ports d'entrées / sorties, notamment de nature à recevoir et émettre des signaux depuis et vers des dispositifs tiers de l'aéronef.

Le processeur 1001 est capable d'exécuter des instructions chargées dans la RAM 1002 à partir de la ROM 1003, d'une mémoire externe (non représentée), d'un support de stockage (tel qu'une carte SD), ou attachée à un réseau de communication. Lorsque le système embarqué 4 est mis sous tension, le processeur 1001 est capable de lire depuis la RAM 1002 des instructions et de les exécuter. Ces instructions forment un programme d'ordinateur causant la mise en œuvre, par le processeur 1001, du procédé 100.

La mémoire vive comprend au moins une mémoire tampon : une mémoire respective de chaque canal C1, C2, C3, selon le premier mode de réalisation, et une mémoire commune aux trois canaux C1, C2 et C3 selon le deuxième mode de réalisation.

Tout ou partie du procédé implémenté par le système embarqué 4, ou ses variantes décrites, peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le système embarqué 4 comprend de la circuiterie électronique configurée pour mettre en œuvre les procédés et sous-procédés décrits en relation avec lui-même permettant d'opérer des communications entre l'aéronef 2 et la station distante 3. Bien évidemment, le système embarqué 4 de communication comprend en outre tous les éléments usuellement présents dans un système comprenant une unité de contrôle et ses périphériques, tels que, notamment, un circuit d'alimentation, un circuit de supervision d'alimentation, un ou plusieurs circuits d'horloge, un circuit de remise à zéro, des ports d'entrées-sorties, des entrées d'interruptions, des drivers de bus, des convertisseurs numérique vers analogique et analogique vers numérique, idéalement rapides, cette liste étant non exhaustive.

Bien que les mises en œuvre décrites ci-dessus aient été décrites et représentées en référence à des étapes particulières exécutées dans un ordre particulier, il sera entendu que ces étapes peuvent être combinées, subdivisées ou réordonnées sans s'écarter des enseignements de la présente divulgation. Au moins certaines des étapes peuvent être exécutées en parallèle ou en série. Par conséquent, l'ordre et le regroupement des étapes ne constituent pas une limitation de la présente invention.

Des modifications et des améliorations aux mises en œuvre décrites ci-dessus de la présente invention peuvent apparaître à l'homme du métier. La description ci-dessus est illustrative au travers d'exemples plutôt que limitative. La portée de la présente invention est donc limitée uniquement par la portée des revendications ci-dessous.

## Revendications

1. Procédé de sélection d'un canal de communication, dit canal d'utilisation, parmi une pluralité de canaux de communication (C1, C2, C3) entre un système embarqué (4) de communication d'un aéronef (2) et une station de communication (3) disposée à distance de l'aéronef (2), dite station distante (3), le procédé (100) comprenant :
- une étape (S1) de détermination, pour chacun des canaux (C1, C2, C3) de communication, d'une ou plusieurs informations représentatives d'une qualité de transmission d'un message entre le système embarqué (4) et la station distante (3), le message étant soit un message dit « utile » reçu par le système embarqué (4), ce message utile étant un message transmis vers le système embarqué (4) par une application émettrice source embarquée à bord de l'aéronef, soit un message sonde, dit message « ping », les messages ping étant transmis selon une période donnée,
- une étape (S2) de classement desdits canaux de communication (C1, C2, C3) selon des indices respectivement représentatifs des qualités de transmission déterminées pour chacun desdits canaux, à partir des desdites informations déterminées ; un unique indice étant attribué pour chacun des canaux,
- une étape (S3) de sélection du canal d'utilisation comme étant le canal, parmi les canaux de communication (C1, C2, C3), présentant la meilleure qualité de transmission à partir desdits indices, le procédé étant **caractérisé en ce qu'**il comprend également :
- une étape (101) de détermination d'un temps de mise en mémoire tampon de chaque message utile reçu, dit, temps d'éligibilité, et, si le temps d'éligibilité est non nul,
- une étape (102) d'émission du message utile, dit message utile éligible, à la place d'un message ping via le canal d'utilisation.

2. Procédé de sélection selon la revendication 1, comprenant une étape (103) d'analyse de mise en mémoire tampon du message utile éligible comprenant une étape (105, 106) de vérification dépendant d'un état de la mémoire tampon et d'un paramètre relatif au message utile éligible.

3. Procédé de sélection selon la revendication précédente, le système embarqué (4) comprenant au moins une mémoire tampon, dans lequel l'étape (103) d'analyse de mise en mémoire tampon du message utile éligible comprend une étape (104) de détermination d'un ordre de remplissage de ladite au moins une mémoire tampon.

4. Procédé de sélection selon la revendication précédente, le système embarqué (4) comprenant une mémoire tampon dédiée à chaque canal (C1, C2, C3), dans lequel, au cours de l'étape (105, 106) de vérification, pour le canal dont la mémoire tampon est à remplir en priorité selon l'ordre obtenu à l'issue de l'étape (104) de détermination d'un ordre de remplissage, si ladite mémoire tampon est vide, et si un temps maximal de mise en mémoire tampon du message (Tbx) est supérieur à la durée (D) qui reste jusqu'à la prochaine émission d'un message ping, alors le message utile éligible est mis dans la mémoire tampon, au cours de l'étape (103) d'analyse de mise en mémoire tampon.

5. Procédé de sélection selon la revendication précédente dans lequel, si le temps maximal de mise en mémoire tampon du message (Tbx) est inférieur ou égal à la durée (D) qui reste jusqu'à la prochaine émission d'un message ping, alors le message utile éligible n'est pas mis dans la mémoire tampon et il est envoyé en tant que message utile au cours d'une étape d'envoi (106).

6. Procédé de sélection selon la revendication 2 ou 3, le système embarqué (4) comprenant une mémoire tampon (B) commune à tous les canaux (C1, C2, C3), dans lequel, au cours de l'étape de comparaison entre un état de la mémoire tampon et un paramètre du message utile éligible, on compare un nombre de messages contenus dans la mémoire tampon (B), dit nombre de messages (Nm) et un nombre total de message ping à envoyer pendant un temps égal à un temps maximal de mise en mémoire tampon du message (Tbx), dit nombre de pings (Np), et, si le nombre de pings (Np) est supérieur au nombre de messages (Nm), alors le message utile éligible est mis dans la mémoire tampon, au cours de l'étape (103) d'analyse de mise en mémoire tampon.

7. Procédé de sélection selon la revendication précédente dans lequel, si le nombre de pings (Np) est inférieur ou égal au nombre de messages (Nm), alors le message utile éligible n'est pas mis dans la mémoire tampon et il est envoyé en tant que message utile au cours d'une étape d'envoi (106).

8. Système embarqué (4) de communication destiné à équiper un aéronef (2), configuré pour opérer des communications avec une station de communication (3) distante à travers un canal de communication (C1, C2, C3) dit « meilleur canal » parmi une pluralité de canaux de communication (C1, C2, C3), le système embarqué étant configuré pour mettre en œuvre les étapes suivantes :
- une étape (S1) de détermination, pour chacun des canaux (C1, C2, C3) de communication, d'une ou plusieurs informations représentatives d'une qualité de transmission d'un message entre l'aéronef (2) et la station distante (3), le message étant soit un message dit « utile » reçu par le système embarqué (4), ce message utile étant un message transmis vers le système embarqué (4) par une application émettrice source embarquée à bord de l'aéronef, soit un message sonde, dit message « ping », les messages ping étant transmis selon une période donnée,
- une étape (S2) de classement desdits canaux de communication (C1, C2, C3) selon des indices respectivement représentatifs des qualités de transmission de bout en bout déterminées pour chacun desdits canaux, à partir des desdites informations déterminées ; un unique indice étant attribué pour chacun des canaux,
- une étape (S3) de sélection du canal d'utilisation comme étant le canal, parmi les canaux de communication (C1, C2, C3), présentant la meilleure qualité de transmission à partir desdits indices, le système étant caractérisé pour mettre en oeuvre également les étapes suivantes :
- une étape (101) de détermination d'un temps de mise en mémoire tampon de chaque message utile reçu, dit, temps d'éligibilité, et, si le temps d'éligibilité est non nul, et
- une étape (102) d'émission du message utile, dit message utile éligible, à la place d'un message sonde.

9. Aéronef (2) comprenant un système embarqué (4) de communication selon la revendication précédente.

10. Support lisible par ordinateur, comportant des instructions pour exécuter le procédé selon l'une des revendications 1 à 7.

## Patentansprüche

1. Verfahren zum Auswählen eines Kommunikationskanals, Nutzkanal genannt, aus einer Mehrzahl von Kommunikationskanälen (C1, C2, C3) zwischen einem Bordsystem (4) zur Kommunikation eines Flugzeugs (2) und einer Kommunikationsstation (3), die entfernt von dem Flugzeug (2) angeordnet ist, entfernte Station (3) genannt, das Verfahren (100) umfassend:
- einen Schritt (S1) des Bestimmens, für jeden der Kommunikationskanäle (C1, C2, C3), einer oder mehrerer Informationen, die für eine Übertragungsqualität einer Nachricht zwischen dem Bordsystem (4) und der entfernten Station (3) repräsentativ sind, wobei die Nachricht entweder eine so genannte "nützliche" Nachricht ist, die von dem Bordsystem (4) empfangen wird, wobei diese nützliche Nachricht eine Nachricht ist, die zu dem Bordsystem (4) von einer sendenden Quellanwendung an Bord des Flugzeugs übertragen wird, oder eine Sondennachricht, "Ping"-Nachricht genannt, wobei die Ping-Nachrichten gemäß einer bestimmten Periode übertragen werden,
- einen Schritt (S2) des Klassifizierens der Kommunikationskanäle (C1, C2, C3) nach Indizes, die jeweils repräsentativ für Übertragungsqualitäten sind, die für jeden der Kanäle ausgehend von den bestimmten Informationen bestimmt wurden; wobei jedem Kanal ein einziger Index zugewiesen wird,
- einen Schritt (S3) des Auswählens des Nutzkanals als den Kanal unter den Kommunikationskanälen (C1, C2, C3), der ausgehend von den Indizes die beste Übertragungsqualität aufweist, wobei das Verfahren **dadurch gekennzeichnet ist, dass** es auch umfasst:
- einen Schritt (101) des Bestimmens einer Pufferungszeit jeder empfangenen nützlichen Nachricht, Wählbarkeitszeit genannt, und, wenn die Wählbarkeitszeit ungleich null ist,
- einen Schritt (102) des Sendens der nützlichen Nachricht, wählbare nützliche Nachricht genannt, anstelle einer Ping-Nachricht über den Nutzkanal.

2. Verfahren zum Auswählen nach Anspruch 1, umfassend einen Schritt (103) des Analysierens der Pufferung der wählbaren nützlichen Nachricht, umfassend einen Schritt (105, 106) des Überprüfens, der von einem Zustand des Pufferspeichers und von einem Parameter bezüglich der wählbaren nützlichen Nachricht abhängt.

3. Verfahren zum Auswählen nach dem vorhergehenden Anspruch, wobei das Bordsystem (4) mindestens einen Pufferspeicher umfasst, wobei der Schritt (103) des Analysierens der Pufferung der wählbaren nützlichen Nachricht einen Schritt (104) des Bestimmens einer Füllreihenfolge des mindestens einen Pufferspeichers umfasst.

4. Verfahren zum Auswählen nach dem vorhergehenden Anspruch, wobei das Bordsystem (4) einen dedizierten Pufferspeicher für jeden Kanal (C1, C2, C3) umfasst, wobei, während des Schritts (105, 106) des Überprüfens, für den Kanal, dessen Pufferspeicher gemäß der nach dem Schritt (104) des Bestimmens einer Füllreihenfolge erhaltenen Reihenfolge vorrangig zu füllen ist, wenn der Pufferspeicher leer ist und wenn eine maximale Pufferungszeit der Nachricht (Tbx) länger ist als die Dauer (D), die bis zum nächsten Senden einer Ping-Nachricht verbleibt, die wählbare nützliche Nachricht während des Schritts (103) des Analysieren der Pufferung in dem Pufferspeicher abgelegt wird.

5. Verfahren zum Auswählen nach dem vorhergehenden Anspruch, wobei, wenn die maximale Pufferungszeit der Nachricht (Tbx) kürzer oder gleich der Dauer (D) ist, die bis zum nächsten Senden einer Ping-Nachricht verbleibt, die wählbare nützliche Nachricht nicht in dem Pufferspeicher abgelegt wird und während eines Sendeschritts (106) als nützliche Nachricht gesendet wird.

6. Verfahren zum Auswählen nach Anspruch 2 oder 3, wobei das Bordsystem (4) einen gemeinsamen Pufferspeicher (B) für alle Kanäle (C1, C2, C3) umfasst, wobei während des Schritts des Vergleichens zwischen einem Zustand des Pufferspeichers und einem Parameter der wählbaren nützlichen Nachricht eine Anzahl von Nachrichten, die in dem Pufferspeicher (B) enthalten sind, Anzahl von Nachrichten (Nm) genannt, und eine Gesamtzahl von Ping-Nachrichten, die während einer Zeit gleich einer maximalen Pufferungszeit der Nachricht (Tbx) zu senden sind, Anzahl von Pings (Np) genannt, verglichen werden und, wenn die Anzahl von Pings (Np) größer als die Anzahl von Nachrichten (Nm) ist, die wählbare nützliche Nachricht während des Schritts (103) des Analysierens der Pufferung in dem Pufferspeicher abgelegt wird.

7. Verfahren zum Auswählen nach dem vorhergehenden Anspruch, wobei wenn die Anzahl von Pings (Np) kleiner oder gleich der Anzahl von Nachrichten (Nm) ist, die wählbare nützliche Nachricht nicht in dem Pufferspeicher abgelegt wird und während eines Sendeschritts (106) als nützliche Nachricht gesendet wird.

8. Bordsystem (4) zur Kommunikation, das zur Ausrüstung eines Flugzeugs (2) bestimmt ist und dazu ausgelegt ist, Kommunikationen mit einer entfernten Kommunikationsstation (3) über einen Kommunikationskanal (C1, C2, C3), "bester Kanal" genannt, unter einer Mehrzahl von Kommunikationskanälen (C1, C2, C3) durchzuführen, wobei das Bordsystem dazu ausgelegt ist, die folgenden Schritte durchzuführen:
- einen Schritt (S1) des Bestimmens, für jeden der Kommunikationskanäle (C1, C2, C3), einer oder mehrerer Informationen, die für eine Übertragungsqualität einer Nachricht zwischen dem Flugzeug (2) und der entfernten Station (3) repräsentativ sind, wobei die Nachricht entweder eine so genannte "nützliche" Nachricht ist, die von dem Bordsystem (4) empfangen wird, wobei diese nützliche Nachricht eine Nachricht ist, die zu dem Bordsystem (4) von einer sendenden Quellanwendung an Bord des Flugzeugs übertragen wird, oder eine Sondennachricht, "Ping"-Nachricht genannt, wobei die Ping-Nachrichten gemäß einer bestimmten Periode übertragen werden,
- einen Schritt (S2) des Klassifizierens der Kommunikationskanäle (C1, C2, C3) nach Indizes, die jeweils repräsentativ für Ende-zu-Ende-Übertragungsqualitäten sind, die für jeden der Kanäle ausgehend von den bestimmten Informationen bestimmt wurden; wobei jedem Kanal ein einziger Index zugewiesen wird,
- einen Schritt (S3) des Auswählens des Nutzkanals als den Kanal unter den Kommunikationskanälen (C1, C2, C3), der ausgehend von den Indizes die beste Übertragungsqualität aufweist, wobei das System **dadurch gekennzeichnet ist, dass** es auch die folgenden Schritte durchführt:
- einen Schritt (101) des Bestimmens einer Pufferungszeit jeder empfangenen nützlichen Nachricht, Wählbarkeitszeit genannt, und, wenn die Wählbarkeitszeit ungleich null ist, und
- einen Schritt (102) des Sendens der nützlichen Nachricht, wählbare nützliche Nachricht genannt, anstelle einer Sondennachricht.

9. Flugzeug (2), das ein Bordsystem (4) zur Kommunikation nach dem vorhergehenden Anspruch umfasst.

10. Computerlesbares Medium, das Anweisungen zum Ausführen des Verfahrens nach einem der Ansprüche 1 bis 7 beinhaltet.

## Claims

1. Method for selecting a communication channel, called utilization channel, from among a plurality of communication channels (C1, C2, C3) between an on-board communication system (4) of an aircraft (2) and a communication station (3), called remote station (3), disposed at a distance from the aircraft (2), the method (100) comprising:
- a step (S1) of determining, for each of the communication channels (C1, C2, C3), one or more items of information representing the transmission quality of a message between the on-board system (4) and the remote station (3), the message being either a "useful" message received by the on-board system (4), with this useful message being a message transmitted to the on-board system (4) by a source transmitting application on board the aircraft, or a probe message, called "ping" message, with the ping messages being transmitted over a given period;
- a step (S2) of classifying said communication channels (C1, C2, C3) according to indices respectively representing the transmission qualities determined for each of said channels, based on said determined information, with a single index being assigned for each channel;
- a step (S3) of selecting the utilization channel as being the channel, from among the communication channels (C1, C2, C3), exhibiting the best transmission quality based on said indices, the method being **characterized in that** it also comprises:
- a step (101) of determining a buffering time, called eligibility time, for each received useful message; and, if the eligibility time is non-zero,
- a step (102) of transmitting the useful message, called eligible useful message, instead of a ping message via the utilization channel.

2. Selection method according to Claim 1, comprising a step (103) of analysing the buffering of the eligible useful message, comprising a checking step (105, 106) depending on a state of the buffer memory and a parameter relating to the eligible useful message.

3. Selection method according to the preceding claim, the on-board system (4) comprising at least one buffer memory, wherein the step (103) of analysing the buffering of the eligible useful message comprises a step (104) of determining an order for filling said at least one buffer memory.

4. Selection method according to the preceding claim, the on-board system (4) comprising a buffer memory dedicated to each channel (C1, C2, C3), wherein, during the checking step (105, 106), for the channel whose buffer memory is to be filled as a priority according to the order obtained on completion of the step (104) of determining a filling order, if said buffer memory is empty, and if a maximum message buffering time (Tbx) is greater than the duration (D) remaining until the next transmission of a ping message, then the eligible useful message is placed in the buffer memory during the step (103) of analysing buffering.

5. Selection method according to the preceding claim, wherein, if the maximum message buffering time (Tbx) is less than or equal to the duration (D) remaining until the next transmission of a ping message, then the eligible useful message is not placed in the buffer memory and is sent as a useful message during a sending step (106).

6. Selection method according to Claim 2 or 3, the on-board system (4) comprising a buffer memory (B) common to all the channels (C1, C2, C3), wherein, during the step of comparing between a state of the buffer memory and a parameter of the eligible useful message, a number of messages, called number of messages (Nm), contained in the buffer memory (B) is compared with a total number of ping messages, called number of pings (Np), to be sent over a time equal to a maximum message buffering time (Tbx) and, if the number of pings (Np) is greater than the number of messages (Nm), then the eligible useful message is placed in the buffer memory, during the step (103) of analysing buffering.

7. Selection method according to the preceding claim, wherein, if the number of pings (Np) is less than or equal to the number of messages (Nm), then the eligible useful message is not placed in the buffer memory and is sent as a useful message during a sending step (106).

8. On-board communication system (4) intended to equip an aircraft (2), configured to establish communications with a remote communication station (3) through a communication channel (C1, C2, C3), called "best channel", from among a plurality of communication channels (C1, C2, C3), with the on-board system being configured to implement the following steps:
- a step (S1) of determining, for each of the communication channels (C1, C2, C3), one or more items of information representing the transmission quality of a message between the aircraft (2) and the remote station (3), the message being either a "useful" message received by the on-board system (4), with this useful message being a message transmitted to the on-board system (4) by a source transmitting application on board the aircraft, or a probe message, called "ping" message, with the ping messages being transmitted over a given period;
- a step (S2) of classifying said communication channels (C1, C2, C3) according to indices respectively representing end-to-end transmission qualities determined for each of said channels, based on said determined information, with a single index being assigned for each channel;
- a step (S3) of selecting the utilization channel as being the channel, from among the communication channels (C1, C2, C3), exhibiting the best transmission quality based on said indices, the system being characterized to also implement the following steps:
- a step (101) of determining a buffering time, called eligibility time, for each received useful message; and, if the eligibility time is non-zero,
- a step (102) of transmitting the useful message, called eligible useful message, instead of a probe message.

9. Aircraft (2) comprising an on-board communication system (4) according to the preceding claim.

10. Computer-readable medium comprising instructions for executing the method according to any of Claims 1 to 7.
